# EUROPÄISCHE PATENTSCHRIFT

(11) **EP 1 590 132 B1**
(45) Veröffentlichungstag und Bekanntmachung des Hinweises auf die Patenterteilung: **26.03.2008**
(21) Anmeldenummer: 04705749.2
(22) Anmeldetag: 28.01.2004
(51) Int. Cl.: B25F 1/00, B26B 11/00, G06F 3/023, G06F 3/033

(54) **TASCHENMESSER MIT MIKROPROZESSOR**
POCKET-KNIFE COMPRISING A MICROPROCESSOR
COUTEAU DE POCHE POURVU D'UN MICROPROCESSEUR

(30) Priorität: 07.02.2003 CH 1872003
(43) Veröffentlichungstag der Anmeldung: 02.11.2005
(73) Patentinhaber: Flytec AG, 6048 Horw (CH)
(72) Erfinder: LERCH, Erich, CH-6206 Neuenkirch (CH); JODER, Peter, CH-6010 Kriens (CH)
(74) Vertreter: Irniger, Ernst
(86) Internationale Anmeldenummer: PCT/CH2004/000045
(87) Internationale Veröffentlichungsnummer: WO 2004/069488

(56) Entgegenhaltungen:
- EP-A- 0 905 599
- EP-A- 1 037 230
- WO-A-99/56918
- US-A- 5 421 460
- US-A- 5 825 353
- US-B1- 6 219 869
- PATENT ABSTRACTS OF JAPAN Bd. 2003, Nr. 05, 12. Mai 2003 (2003-05-12) -& JP 2003 010570 A (TCHIP SEMICONDUCTOR SA), 14. Januar 2003 (2003-01-14)
- PATENT ABSTRACTS OF JAPAN Bd. 1996, Nr. 02, 29. Februar 1996 (1996-02-29) -& JP 07 282689 A (ALPS ELECTRIC CO LTD), 27. Oktober 1995 (1995-10-27)

## Beschreibung

Die vorliegende Erfindung betrifft ein Taschenmesser gemäß dem Oberbegriff der Anspruchs 1, beinhaltend mindestens einen elektronischen Schaltkreis bzw. mindestens einen Mikroprozessor, eine am Taschenmesser angeordnete Steuerung des Schaltkreises oder Prozessors sowie eine Anzeige. Ein solches Taschenmesser ist aus WO 99/56918 bekannt.

Werkzeuge, wie insbesondere Handwerkzeuge, Taschenmesser und dgl. werden vermehrt mit Zusatzfunktionen versehen, wie unter anderem Mess-, Anzeige- oder Speicherfunktionen. So ist beispielsweise aus der WO99/56918 ein Multifunktionstool bekannt, wie insbesondere ein Taschenmesser, bei welchem Mess- und Anzeigeeinrichtungen vorgesehen sind, um das Messer auch als Kompass, Barometer, Höhenmesser, Thermometer und dgl. verwenden zu können. Die Erfassung, Auswertung und Anzeige von Daten erfolgt elektronisch bzw. mittels einer sogenannten LCD-Anzeige. Je mehr Daten auszuwerten, abzuspeichern und/oder anzuzeigen sind, um so wichtiger ist, dass eine einfache Menuführung bzw. eine einfache Bedienung und/oder Eingabe von Daten möglich ist. Gerade aber bei allgemeinen Handwerkzeugen, wie insbesondere bei Taschenmessern, ist dies nicht einfach und die in der WO99/56918 vorgeschlagene Lösung ist bezüglich des erwähnten Problems nicht ausbaufähig.

Ebenfalls bekannt ist ein Taschenmesser mit einem GPS-Receiver, einer Antenne und Verarbeitungselektronik aus der japanischen Patentschrift 2003-010570.

Es ist eine Aufgabe der vorliegenden Erfindung ein Taschenmesser, vorzuschlagen, bei welchem eine einfache Bedienung bzw. Menuführung möglich ist, ohne die Funktionsfähigkeit des Taschenmessers zu beeinträchtigen.

Erfindungsgemäss wird ein Taschenmesser gemäss dem Wortlaut nach Anspruch 1 vorgeschlagen.

Weitere bevorzugte Ausführungsvarianten des erfindungsgemässen Taschenmessers sind in den abhängigen Ansprüchen 2 bis 8 oder der nachfolgenden Beschreibung charakterisiert.

Die Erfindung wird nun beispielsweise und unter Bezug auf die beigefügten Figuren näher erläutert.

Dabei zeigen:
- Fig. 1: schematisch und in Perspektive, gesehen auf eine seitliche Abdeckung bzw. Schale ein Taschenmesser,
- Fig. 2: schematisch in perspektivischer Draufsicht eine weitere Ausführungsvariante einer Schale eines Taschenmessers,
- Fig. 3: einen Ausschnitt einer weiteren Ausführungsvariante einer Abdeckung bzw. Schale eines Taschenmessers,
- Fig. 4: schematisch dargestellt, das Anordnen von radartigen Betätigungsorganen an einem Taschenmessers,
- Fig. 5: in Draufsicht eine weitere Ausführungsvariante einer Abdeckung eines Taschenmessers,
- Fig. 6: im Querschnitt einen sogenannten "Think-Pad" angeordnet in einer Abdeckung eines erfindungsgemässen Taschenmessers, und
- Fig. 7a und 7b: in Perspektive und Seitenansicht ein Taschenmesser, aufweisend Warnblinkelemente.

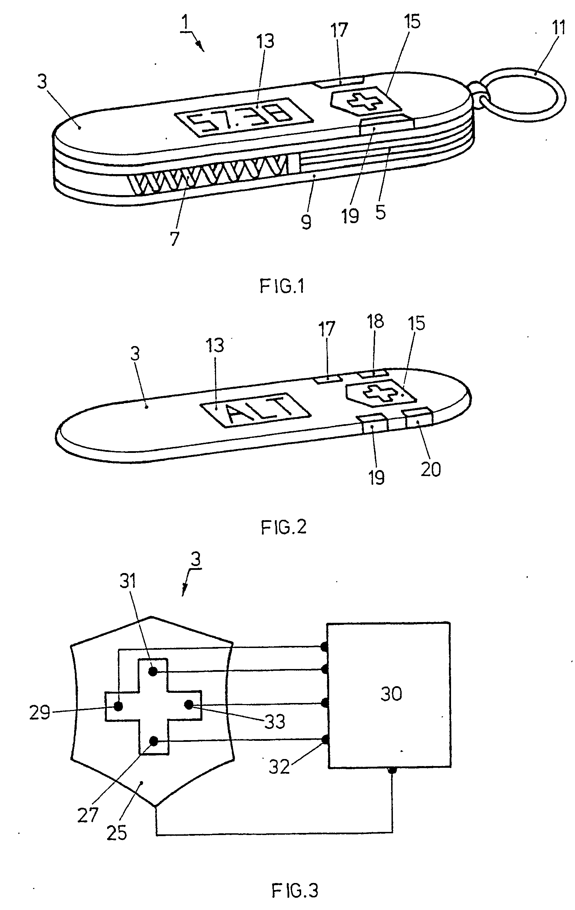

Figur 1 zeigt in Perspektive und gesehen auf eine der beiden seitlichen Abdeckungen ein Taschenmesser 1, wobei in der in Figur 1 sichtbaren Abdeckung bzw. Schale 3 ein nicht sichtbarer elektronischer Schaltkreis bzw. Mikroprozessor angeordnet ist. Erkennbar dafür ist eine LCD-Anzeige 13, sowie ein Hauptbetätigungsorgan 15 zur Steuerung bzw. Betätigung des Mikroprozessors. Ebenfalls seitlich am Taschenmesser 1 sind schematisch angedeutet Werkzeuge 5 und 7, eine die Rückseite abdeckende Schale 9 sowie ein endständiger Anhänge-Ring 11.

Um nun eine verbesserte bzw. einfachere Menusteuerung zu ermöglichen sind in der Abdeckung 3 zwei weitere Betätigungsorgane bzw. Tasten 17 und 19 angeordnet.

So ist es möglich, mittels der Haupttaste 15 sich innerhalb eines Hauptmenus zu bewegen, zur Auswahl verschiedener Hauptfunktionen, wie Zeitangabe, Temperatur, Messung, etc. Mittels der seitlichen Tasten 17 und 19 können innerhalb dieser Hauptfunktionen Untermenus gesteuert werden, wie beispielsweise im Falle der Zeitangabe, die Zeit an verschiedenen geografischen Orten, wie beispielsweise New York, in Tokyo, etc. oder aber die Temperaturangabe in verschiedenen Masseinheiten, wie Grad-Cellsius, Grad-Fahrenheit, Grad-Kelvin, etc. Bei den genannten Beispielen handelt es sich selbstverständlich um sehr einfache Beispiele, und es ist auch möglich in Menus mit erweiterten Datenmengen zu blättern, wie beispielsweise in einem Adressbuch, einem Zeitplan, etc.

Figur 2 zeigt lediglich eine Abdeckung 3, wieder aufweisend ein Display 13, sowie nun nebst der Haupttaste 15, vier zusätzliche Tasten 17 bis 20. Es versteht sich von selbst, dass durch vier zusätzliche Tasten die Menusteuerung weiter ausgedehnt werden kann.

Wie zusätzlich in den beiden Figuren 1 und 2 erkennbar, ist die Haupttaste 15 in Form eines Schweizerkreuzes ausgebildet. So ist es selbstverständlich möglich, anstelle dieses Schweizerkreuzes auch ein anderes Logo zu verwenden, wie beispielsweise ein Firmenlogo, ein anderes nationales Emblem, ein persönlich gestaltetes Logo, etc. Durch die verschiedenen, gestalterischen Möglichkeiten ist es beispielsweise möglich, im Sinne eines Kundengeschenkes die erfindungsgemäss beschriebenen Taschenmesser zu gestalten.

Figur 3 zeigt eine weitere Ausführungsvariante, wie mehrere Bedienungsorgane in der Abdeckung 3 angeordnet werden können. Dabei ist das mittige Logo, beispielsweise in Form eines Schweizerkreuzes, als Berührungsschalter ausgeführt, wobei in den Schenkeln des Schweizerkreuzes Elektroden bzw. Berührungspunkte 27, 29, 31 und 33 vorgesehen sind. Der äussere Rand 25 und die vier Arme des Schweizerkreuzes bzw. die erwähnten Berührungspunkte 27, 29, 31 und 33 sind leitend über Anschlüsse 32 mit einer Auswertelektronik 30 verbunden. Je nach dem welches Segment des Schweizerkreuzes mit einem Finger gegen die Bezugsmasse des Randes 25 Kontakt macht, wird als Information genommen. Die Berührung ist kraftlos.

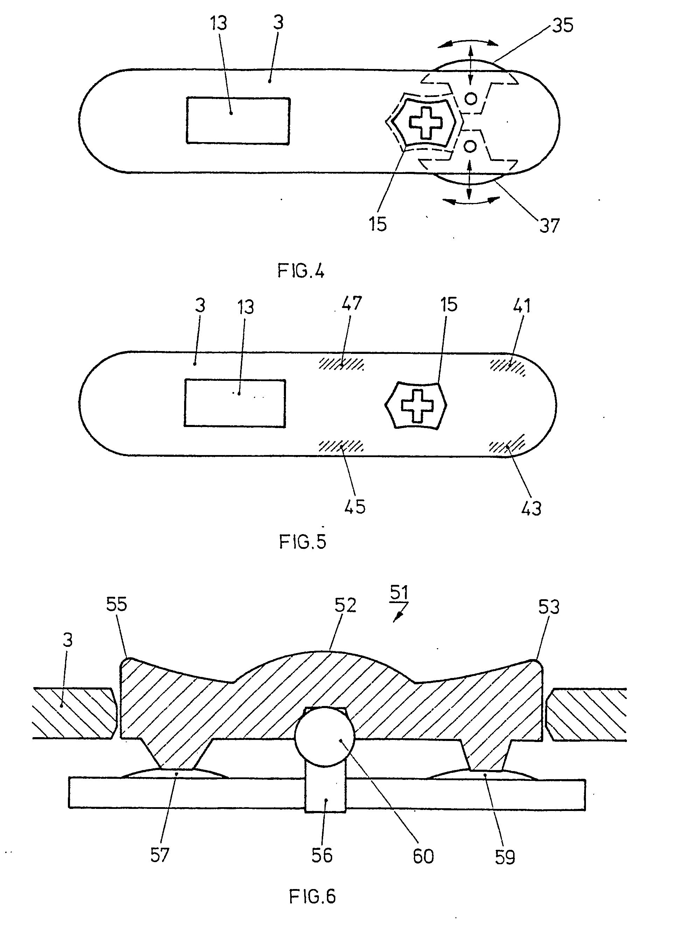

In Figur 4 ist eine weitere Ausführungsvariante zusätzlicher Bedienungsorgane dargestellt, und zwar in Form seitlich angeordneter Räder 35 und 37. Diese beiden Räder ermöglichen ein sogenanntes "scrollen" oder blättern innerhalb von Menus, wie insbesondere von Untermenus.

Figur 5 zeigt wiederum eine weitere Ausführungsvariante einer seitlichen Abdeckung bzw. Schale 3, indem zusätzlich zum Hauptschalter 15 Berührungsbereich 41 bis 47 an der Abdeckung angeordnet sind. Diese Bereiche können analog der Ausgestaltung von Figur 3 beispielsweise leitend untereinander und mit einer Auswertelektronik verbunden sein. Je nach dem, welcher der vier Bereiche mit dem Finger gegen den benachbarten Bereich der Schale Kontakt macht, wird als Information genommen. Erneut ist die Berührung kraftlos.

Schliesslich ist erfindungsgemäß in Figur 6 im Sinne eines sogenannten "Think-Pad" dargestellt, welcher bekanntlich von der Firma IBM entwickelt worden ist. An sich ist ein derartiger "Think-Pad" 51 ähnlich einem "Touch-Pad", wie in Figur 3 dargestellt, welcher zusätzlich um einen Drehpunkt 60 erweitert worden ist. Das Hauptmenu ist nun steuerbar über ein zentrales Schaltelement 56, welches auf Berührung oder Druck auf den mittigen Bereich 52 aktiviert werden kann. Mit Betätigen der seitlich überhöhten Bedienungsbereiche 53 und 55 können die Schaltelemente 57 bzw. 59 aktiviert werden. Im Grund genommen handelt es sich um eine Art "Joy-Stick", um in den verschiedenen Menus zu navigieren. Selbstverständlich kann der in Figur 6 dargestellte "Think-Pad" zusätzlich zur in Blattebene verlaufenden Richtung auch senkrecht zur Blattebene kippbar betätigt werden.

Die erfindungsgemäss vorgeschlagenen Taschenmesser werden insbesondere in Freizeit und Sport verwendet, unter anderem beispielsweise auch bei Wanderungen im Hochgebirge, bei Abenteuerreisen, bei Fahrten in unwirtliche Gegenden, etc. Aber auch Berufsleute, Piloten, Waldarbeiter, etc. sind prädestiniert erfindungsgemäss vorgeschlagene Taschenmesser zu verwenden. All die genannten, interessierten Kreise sind oft Situationen ausgesetzt, in welchen es nützlich wäre, ein Notsignal-imitierendes Gerät auf sich zu führen. So ist es beispielsweise möglich, im vorgeschlagenen Taschenmesser einen Sender vorzusehen, mittels welchem durch Betätigen eines der obengenannten Berührungsorgane ein Notsignal ausgesendet werden kann.

Damit aber auch der Standort einer sich in Not befindlichen Person visualisiert werden kann, wird nun vorgeschlagen, beispielsweise an mindestens einer der beiden Abdeckungen bzw. Schalen 3 des Taschenmessers 1 oder gegebenenfalls verteilt über das ganze Taschenmesser sogenannte LED-Lichtelemente vorzusehen, welche wiederum durch Betätigen eines der Betätigungsorgane aktiviert werden können. Diese können entweder helles Licht aussenden oder im Sinne eines sogenannten Notflash blinken.

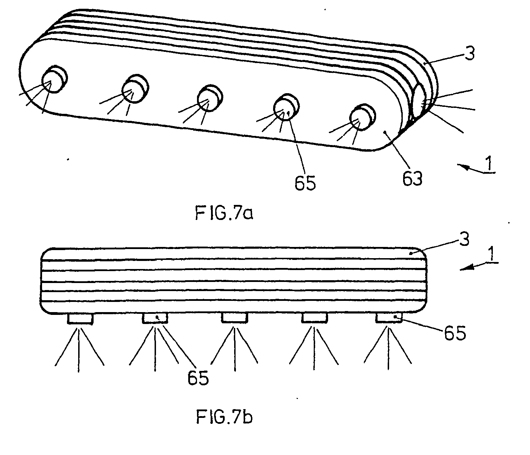

In Figur 7a sind derartige LED-Elemente 65 in einer seitlichen Abdeckung 63 erkennbar dargestellt. Figur 7b zeigt das Taschenmesser 1 aus Figur 7a in Ansicht auf eine Seite gesehen, wodurch erkennbar ist, dass die LEDs 65 seitlich leicht vorstehen.

Schliesslich wird gemäss einer weiteren Ausführungsvariante vorgeschlagen, einen Bereich des Taschenmessers oder ein Werkzeug zu magnetisieren, damit das Taschenmesser auf einer Metalloberfläche fest positioniert werden kann.

## Patentansprüche

1. Taschenmesser, beinhaltend mindestens einen elektronischen Schaltkreis bzw. mindestens einen Mikroprozessor, eine am Werkzeug angeordnete Steuerung des Schaltkreises bzw. Prozessors sowie eine Anzeige (13), wobei der mindestens eine, elektronische Schaltkreis bzw. der Mikroprozessor sowie die Anzeige in mindestens einer seitlichen Abdeckung bzw. Schale (3) am Taschenmesser (1) angeordnet sind, **dadurch gekennzeichnet, dass** die Steuerung mindestens zwei oder mehrere auf Berührung oder Druck betätigbare Organe (15, 17, 18, 19, 20, 27, 29, 31, 33, 41, 43, 45, 47,51) aufweist, wobei mindestens eines der Organe ein Betätigungsorgan ist, aufweisend ein zentrales Schaltelement (56), welches auf Druck oder Berührung aktivierbar ist, und das Organ um einen zentralen Drehpunkt (60) in mindestens zwei, vorzugsweise mehreren Richtungen kippbar ist für die Betätigung von Schaltelementen (57, 59) und damit zur Steuerung von Menus bzw. Untermenus.

2. Taschenmesser nach Anspruch 1, **dadurch gekennzeichnet, dass** ein Organ bzw. eine Taste zur Steuerung eines Hauptmenus vorgesehen ist und mindestens ein weiteres Betätigungsorgan zur Bedienung mindestens eines Untermenus.

3. Taschenmesser nach einem der Ansprüche 1 oder 2, **dadurch gekennzeichnet, dass** das Organ bzw. die Taste zur Steuerung bzw. Bedienung des Hauptmenus im Bereich der Mittellängsachse der Schale bzw. Abdeckung angeordnet ist, und einem Firmen-Logo, einem Hoheitszeichen oder einem anderen gestalterischen Zeichen bzw. Bild gleich ausgebildet ist.

4. Taschenmesser nach einem der Ansprüche 1 bis 3, **dadurch gekennzeichnet, dass** entlang dem Seitenrand der Abdeckung bzw. Schale mindestens ein oder mehrere auf Druck oder Berührung betätigbare Organe zur Betätigung des Hauptmenus und/oder weiterer Menus, wie insbesondere Untermenus, angeordnet sind.

5. Taschenmesser nach einem der Ansprüche 1 bis 4, **dadurch gekennzeichnet, dass** mindestens ein oder mehrere, radartige Organe vorgesehen sind, um betätigt im Inhalt von Menus, wie insbesondere Untermenus zu "scrollen" oder zu blättern.

6. Taschenmesser nach einem der Ansprüche 1 bis 5, **dadurch gekennzeichnet, dass** in bzw. an der Abdeckung oder Schale verschieden auf Druck oder Berührung reagierende Kontaktbereich bzw. Flächen vorgesehen sind, zur Steuerung bzw. Betätigung des oder der Menus.

7. Taschenmesser nach einem der Ansprüche 1 bis 6, **dadurch gekennzeichnet, dass** in mindestens einer der Abdeckungen bzw. Schalen oder gegebenenfalls verteilt über das ganze Taschenmesser, Warnblinkelemente in Form beispielsweise von sogenannten LEDs vorgesehen sind, welche mittels mindestens einem der Organe aktivierbar sind.

8. Taschenmesser nach einem der Ansprüche 1 bis 7, **dadurch gekennzeichnet, dass** ein Bereich und/oder mindestens ein Werkzeug magnetisch ausgebildet ist (sind), um das Taschenmesser an einer Metalloberfläche fest anzuordnen.

## Claims

1. Pocket knife comprising at least one electronic circuit or at least one micro processor respectively, a controller of the circuit or processor, arranged at the tool as well as a display (13), the at least one electronic circuit or the microprocessor respectively as well as the display are arranged in at least one lateral cover or frame (3) respectively at the pocket knife (1), **characterized in that** the controller contains at least two or several elements, being actuatable upon contact or pressure (15, 17, 18, 19, 20, 27, 29, 31, 33, 41, 43, 45, 47, 51), at least one of the elements is an actuating element having a central control element (56), which is activatable upon pressure or contact and the element is tiltable around a central pivotalpoint (60) in at least two, preferably several directions for the actuation of control elements (57, 59) and as a consequence for the control of menus or submenus respectively.

2. Pocket knife according claim 1, **characterized in that** one element or a bottom respectively is provided for the control of a main menu and at least one further actuating element for the operation of at least one submenu.

3. Pocket knife according to one of the claims 1 or 2, **characterized in that** the element or the bottom respectively for controlling or operation of the main menu is arranged in the area of the central longitudinal axis of the frame or the cover respectively and is designed equal to a company logo, a national emblem or an other creative sign.

4. Pocket knife according to one of the claims 1 to 3, **characterized in that** along the side edge of the cover or frame at least one or several elements are arranged actuatable upon pressure or contact for the operation of the main menu and/or further menus as in particular submenus.

5. Pocket knife according to one of the claims 1 to 4, **characterized in that** at least one or several wheel like elements are provided for scrolling or browsing within the content of menus as in particular submenus upon actuation.

6. Pocket knife according to one of the claims 1 to 5, **characterized in that** in or at the cover or frame several contact areas or contact planes are provided acting upon pressure or contact for the control or the operation of the menu or the menus.

7. Pocket knife according to one of the claims 1 to 6, **characterized in that** within at least one of the covers or frames or eventually distributed across the whole pocket knife warning elements in the form of e.g. so called LEDs are provided which can be activated by means of at least one of the elements.

8. Pocket knife according to one of the claims 1 to 7, **characterized in that** an area and/or at least one tool is (are) magnetic for arranging the pocket knife on a metal surface.

## Revendications

1. Couteau de poche, comprenant au moins un circuit de commutation ou au moins un microprocesseur respectivement, une commande du circuit resp. du processeur disposée sur l'outil ainsi que des moyens de visualisation (13), ledit au moins un circuit de commutation resp. ledit microprocesseur ainsi que les moyens de visualisation étant disposés dans au moins un revêtement resp. une enveloppe latéral (3) sur le couteau (1), **caractérisé en ce que** ladite commande comprend ou moins deux ou plus d'organes pouvant être actionnés par contact ou par pression (15,17,18,19,20,27,29,31,33,41,43,45,47,51), au moins un de ces organes étant un organe de commande présentant un élément de commutation central (56) pouvant être activé par pression ou par contact, l'organe pouvant être basculé autour d'un point de pivotement central (60) dans au moins deux, de préférence plusieurs directions pour activer des éléments de commutation (57,59) et ainsi pour commander des menus ou des sous-menus.

2. Couteau de poche selon la revendication 1, **caractérisé par** un organe resp. une touche prévu pour la commande d'un menu principal et pas au moins un autre organe de commande pour commander au moins un sous-menue.

3. Couteau de poche selon l'une des revendications 1 ou 2, **caractérisé en ce que** l'organe resp. la touche pour la commande du menu principal est prévu dans la zone de l'axe médiane longitudinal de l'enveloppe ou du revêtement est configuré similairement à un logo d'une firme, un emblème de souveraineté ou la forme d'un autre signe.

4. Couteau de poche selon l'une des revendications 1 à 3, **caractérisé en ce que** au moins un ou plusieurs organes pouvant être actionnés par pression ou par contact pour la commande du menu principal et/ou d'autres menus, comme notamment des sous-menus, sont disposés le long du bord latéral de l'enveloppe ou du revêtement.

5. Couteau de poche selon l'une des revendications 1 à 4, **caractérisé par** au moins un ou plusieurs organes sous forme de roues pour, par leur actionnement, feuilleter ou "scroller" dans le contenu de menus, comme notamment dans des sous-menus.

6. Couteau de poche selon l'une des revendications 1 à 5, **caractérisé par** des zones de contact ou des surfaces réagissant sur une pression ou un contact sont prévues dans ou sur le revêtement ou l'enveloppe pour commander resp. actionner le ou les menus.

7. Couteau des poche selon l'une des revendications 1 à 6, **caractérisé en ce que** des éléments d'avertissement clignotants sous forme par exemple d'éléments LED sont prévus dans au moins un des revêtements resp. enveloppes ou éventuellement répartis sur l'ensemble du couteau de poche, ces éléments pouvant être activés du moyen d'au moins un desdits organes.

8. Couteau de poche selon l'une des revendications 1 à 7, **caractérisé en ce qu'**une zone et/ou au moins un des outils est en un matériau magnétique pour pouvoir fixer le couteau de poche sur une surface magnétique.
